# FASCICULE DE BREVET EUROPEEN

(11) **EP 2 504 604 B1**
(45) Date de publication et mention de la délivrance du brevet: **13.09.2017**
(21) Numéro de dépôt: 10799112.7
(22) Date de dépôt: 26.11.2010
(51) Int. Cl.: F16F 7/14

(54) **AMORTISSEUR AVEC COMPOSANT EN ALLIAGE A MEMOIRE DE FORME ET LIMITEUR DE TEMPERATURE; DISPOSITIF DE MAINTIEN COMPRENANT CET AMORTISSEUR**
DÄMPFER MIT EINER KOMPONENTE AUS EINER FORMGEDÄCHTNISLEGIERUNG UND EINEM TEMPERATURBEGRENZER SOWIE STÜTZVORRICHTUNG MIT DIESEM DÄMPFER
DAMPER INCLUDING A SHAPE-MEMORY ALLOY COMPONENT AND A TEMPERATURE LIMITER, AND A SUPPORTING DEVICE COMPRISING SAID DAMPER

(30) Priorité: 26.11.2009 FR 0958407
(43) Date de publication de la demande: 03.10.2012
(73) Titulaire: Institut Francais Des Sciences Et Technologies Des Transports De L'Amenagement Et Des Reseaux (IFSTTAR), 77420 Champs Sur Marne (FR)
(72) Inventeur: PEIGNET, Michaël, F-75009 Paris (FR); MERLIOT, Erick, F-78650 Beynes (FR); DIENG, Mohamadou, F-44840 Les Sorinieres (FR)
(74) Mandataire: Intès, Didier Gérard André
(86) Numéro de dépôt international: PCT/FR2010/052542
(87) Numéro de publication internationale: WO 2011/064507

(56) Documents cités:
- WO-A2-2007/039271
- WO-A2-2009/114357
- JP-A- 60 026 181
- JP-A- 2003 184 732
- US-A1- 2003 053 912
- US-A1- 2009 050 428

## Description

La présente invention concerne un amortisseur et plus généralement, un dispositif de maintien comportant un amortisseur. Elle vise également un dispositif de maintien pour ouvrage d'art, par exemple un dispositif de haubanage, comprenant un amortisseur.

Dans leur utilisation en service, les systèmes mécaniques sont généralement sujets à des vibrations provoquées par les sollicitations extérieures. Ces vibrations affectent la durée de vie (notamment la résistance en fatigue), et doivent donc être prises en compte lors de la conception de structures durables. Ces considérations ont une portée générale, et jouent en particulier un rôle majeur dans le domaine du génie civil, où les vibrations rencontrées couvrent une large plage de fréquences et d'amplitudes. Citons par exemple :
- les vibrations dans les haubans : le taux d'amortissement intrinsèque des haubans est très faible, ce qui les rend particulièrement sensibles aux vibrations liées aux conditions météorologiques (vent, pluie) et au trafic. Les amplitudes de déplacement associées sont relativement faibles (de l'ordre de 5mm à proximité de l'ancrage), de même que les fréquences de vibrations (1-10 Hz) ; et
- les vibrations sismiques : Ces événements extrêmes jouent un rôle important dans la conception d'ouvrages situés dans des zone à risques. Les séismes peuvent provoquer des déplacement de grande amplitude, à des fréquences élevées.

Plutôt que de modifier la conception de la structure elle-même pour la rendre moins sensible aux vibrations - ce qui n'est pas toujours possible -, une stratégie plus souple et en général moins onéreuse consiste à utiliser des amortisseurs ou systèmes d'amortissement. La fonction principale de ceux-ci est de dissiper l'énergie mécanique liée au déplacement relatif entre deux parties (deux corps A et B) de la structure étudiée ; l'une pouvant être le sol, et l'autre l'ouvrage d'art.

Dans ce but, de manière classique un amortisseur tel que décrit dans le document WO 2009/114357 A2 comporte une première et une deuxième parties de liaison reliées à deux corps et servant à amortir un déplacement relatif entre ceux-ci.

Plusieurs techniques sont possibles pour assurer la fonction de dissipation réalisée par l'amortisseur. Les systèmes visqueux (amortisseur hydraulique) sont parmi les plus courants, mais on peut citer également les amortisseurs à frottement, les amortisseurs élasto-plastiques, les amortisseurs à masse accordée.

Cependant, pour réaliser la fonction de dissipation d'énergie, une autre possibilité consiste à avoir recours à un élément de transmission de force, comprenant un composant en alliage à mémoire de forme qui se déforme en dissipant de l'énergie lorsqu'un tel déplacement relatif se produit.

On comprend que l'élément de transmission de force est un composant de l'amortisseur relié aux deux parties de liaison et qui sert à transmettre une force entre le corps A et le corps B, via les parties de liaison. La force ainsi transmise entre les corps A et B contribue à (ou permet de) maintenir les corps A et B dans une position relative constante (ou sensiblement constante).

L'intérêt du matériau à mémoire de forme est qu'il permet une dissipation de l'énergie de déplacement du composant qui vibre ou se déplace, mais reprend sa forme initiale sans présenter de déformation résiduelle lorsque la sollicitation mécanique cesse. Ce comportement spécifique est dit superélastique, typique des matériaux à mémoire de forme.

Cependant, de tels amortisseurs comportant des éléments de transmission de force comprenant un composant à base d'alliage à mémoire de forme perdent une grande partie de leurs propriétés d'amortissement dès que la fréquence de sollicitation dépasse une certaine valeur et/ou que les sollicitations se prolongent pendant plus qu'une certaine durée.

Ce problème conduit à écarter cette famille d'amortisseurs de certaines applications, notamment (mais pas seulement) celles qui nécessitent de pouvoir absorber des vibrations d'origine sismique, dont la fréquence peut être élevée.

Un premier objectif de la présente invention est de résoudre le problème indiqué précédemment, en proposant un amortisseur comportant une première et une deuxième parties de liaison, aptes à être reliées à deux corps pour amortir un déplacement relatif entre ceux-ci, et au moins un élément de transmission de force, relié à ces deux parties de liaison, et comprenant un composant à base d'alliage à mémoire de forme qui se déforme en dissipant de l'énergie lorsqu'un tel déplacement relatif se produit ;
amortisseur qui reste cependant utilisable et conserve ses propriétés d'amortissement dans un large domaine de fréquences de sollicitations.

Cet objectif est atteint grâce au fait que l'amortisseur comporte en outre des moyens de limitation de la température maximale atteinte par ledit composant, qui comprennent au moins un générateur de courant réalisé à base de matériau thermoélectrique et agencé de manière à pouvoir produire un courant électrique sous l'effet d'un échauffement dudit composant, ainsi que des moyens de dissipation de l'énergie électrique transportée par ledit courant.

Le rôle de l'élévation de température dans la perte des propriétés du composant à base d'alliage à mémoire de forme, lorsque celui-ci est soumis à des sollicitations à fréquence ou vitesse de chargement élevée, a en effet pu être mis en évidence par des recherches portant sur les propriétés de tels alliages.

Les propriétés spécifiques des alliages à mémoire de forme sont liées à une transformation de phase solide/solide entre des structures cristallographiques différentes l'austénite et la martensite.

Il est apparu au cours des recherches que le processus de transformation de phase est piloté par les sollicitations thermomécaniques locales, et s'accompagne d'une production de chaleur (contribution réversible liée à la chaleur latente et contribution irréversible liée aux forces de frottement microscopiques).

Expérimentalement, il a été constaté que les performances dissipatives des alliages à mémoire de forme décroissent quand la vitesse de chargement augmente. Les travaux de modélisation, complétés par des test expérimentaux, ont mis en évidence le fait que cet effet est lié au couplage thermomécanique : pour des vitesses de chargement élevées, la chaleur produite localement par le changement de phase n'a pas le temps de se diffuser dans le système, ce qui à chargement égal tend à limiter la dissipation d'énergie. Cet effet est d'autant plus réduit que le composant est maintenu à une température constante.

Pour cette raison, l'amortisseur selon l'invention comporte des moyens de limitation de la température maximale atteinte par le composant à base d'alliage à mémoire de forme ('le composant'). Grâce à ces moyens, les fonctionnalités de l'amortisseur (dissipation, absence de déformation résiduelle) sont rendues indépendantes de la température et par conséquent, de la vitesse de chargement (de sollicitation) de l'amortisseur.

Une large gamme d'alliages à mémoire de forme peut être utilisée pour la réalisation du composant. On peut utiliser par exemple l'alliage titane-nickel (TiNi), dit 'Nitinol', l'alliage Cuivre-aluminium-zinc CuAlZn, l'alliage cuivre-aluminium-nickel CuAlNi, etc.

La forme du composant peut être quelconque. Habituellement, les produits à base d'alliage à mémoire de forme se présentent sous la forme de fils, pouvant avoir différents diamètres, par exemple variant de moins de 1 millimètre à plusieurs centimètres.

Avantageusement, du fait de sa composition le composant permet une déformation de grande amplitude, par exemple allant jusqu'à 8% de sa longueur (dans la direction de la sollicitation en traction et/ou compression).

Enfin, dans un amortisseur selon l'invention, ledit au moins un composant à base d'alliage à mémoire de forme peut ne pas se déformer systématiquement lors de tout déplacement relatif entre les corps A et B. L'amortisseur peut être agencé de telle manière que le composant ne se déforme que pour certaines sollicitations, par exemple, seulement les sollicitations en traction.

Il est par ailleurs connu que, dans une pièce en matériau thermoélectrique, lorsqu'une différence de température apparaît entre deux points de la pièce, il apparaît également une différence de potentiel électrique entre ces deux points (effet Seebeck). En reliant électriquement ces deux points, via un résistor, il est possible de limiter l'échauffement relatif d'un point par rapport à l'autre en dissipant sous forme électrique, dans le résistor, l'énergie thermique présente au point le plus chaud.

Ce phénomène est exploité grâce au générateur de courant agencé au sein de l'amortisseur. De préférence, le générateur est agencé avec principalement une pièce en matériau thermoélectrique, dont une première partie est disposée de manière à s'échauffer quand le composant s'échauffe sous l'effet de sollicitations mécaniques, alors qu'une deuxième partie reste froide. La première partie de la pièce peut être disposée au contact ou au voisinage immédiat du composant ; la deuxième partie inversement se trouve de préférence à une certaine distance du composant, grâce à quoi elle ne subit pas, ou peu, d'échauffement.

Avec un tel agencement, l'échauffement local de la première partie de la pièce, se produisant par conduction et/ou convection de chaleur depuis le composant vers le matériau thermoélectrique, tend à faire naître une différence de potentiel entre la première et la deuxième partie de la pièce. Cette différence de potentiel permet d'engendrer un courant électrique ; la pièce en matériau thermoélectrique constitue donc un générateur de courant. Ce générateur permet de dissiper l'énergie thermique dégagée par le composant, sous forme électrique, au sein d'un résistor ou de tout autre système électrique permettant la dissipation d'énergie électrique.

Dans un mode de réalisation, les moyens de limitation sont aptes à réguler la température atteinte par le composant de telle sorte que celle-ci demeure à une température ou dans une plage de température souhaitée. Comme cela a été dit précédemment, c'est ainsi que l'on peut optimiser les performances dissipatives du composant.

Différentes techniques peuvent être utilisées pour assurer la limitation de la température maximale atteinte par le composant.

Dans un mode de réalisation, les moyens de limitation comportent un dispositif apte à faire circuler un fluide caloporteur autour dudit composant, et des moyens de limitation de la température maximale atteinte par ledit fluide. Ainsi, par l'intermédiaire du fluide caloporteur, la maîtrise de la température du composant découle de la maîtrise de la température du fluide. Cette dernière température peut être maîtrisée et régulée de manière connue en utilisant par exemple des pompe(s), échangeur(s) de chaleur, capteur(s) de mesure de la température en ligne, pilotés par une unité de contrôle notamment électronique.

Dans un mode de réalisation, un courant produit par le générateur de courant présenté précédemment est utilisé pour transmettre une information ; par exemple, en allumant une source lumineuse. Dans ce dernier cas, la source lumineuse témoigne à la fois de l'existence d'une sollicitation, mais aussi du bon fonctionnement de la chaîne de dissipation de l'énergie comprenant le composant et la pièce en matériau thermoélectrique.

Dans un mode de réalisation, une partie en matériau thermoélectrique du générateur est fixée sur une partie de liaison. Ainsi, cette partie du générateur, et en général l'ensemble du générateur, peut être découplée mécaniquement du composant.

Dans un mode de réalisation, l'amortisseur comporte des moyens pour signaler la rupture de l'un des éléments. Une source lumineuse, alimentée par un générateur de courant tel que présenté précédemment, est un exemple de tels moyens.

Avantageusement, le générateur de courant indiqué précédemment peut être utilisé pour émettre et transporter toute information relative à l'amortisseur. L'intérêt de ce générateur est qu'il est autonome en énergie, son énergie provenant simplement des sollicitations mécaniques appliquées à l'amortisseur.

Dans un mode de réalisation, dans l'amortisseur au moins un élément de transmission de force est lié à une portion de fixation d'une partie de liaison, un déplacement relatif de l'élément lié par rapport à ladite portion est stoppé à partir d'une position de blocage dans le sens qui tend à éloigner ledit élément lié de ladite portion, alors que ledit déplacement relatif est libre dans le sens inverse.

L'intérêt de cet agencement est qu'il permet que l'élément considéré (« l'élément lié ») ne peut être sollicité mécaniquement qu'en traction ; la traction s'exerçant nécessairement dans le sens qui tend à éloigner l'élément de la portion de fixation. En cas de sollicitation de l'élément dans le sens contraire, la fixation entre l'élément et la portion de fixation est prévue pour permettre le déplacement libre de l'élément, ce qui fait qu'aucune contrainte de compression ne se développe dans l'élément, et qu'ainsi notamment l'élément n'est pas sollicité en compression et évite donc un éventuel risque de flambage.

Dans un mode de réalisation, l'élément lié comporte une tige de liaison disposée de manière coulissante à l'intérieur d'un passage débouchant de ladite portion de fixation, et une portion de blocage fixée à l'extrémité de ladite tige de liaison, la forme de la tête de blocage empêchant le passage de celle-ci à travers ledit passage. On note que la portion de blocage peut être formée de manière intégrée avec la tige. En général il s'agit d'une tête de blocage qui est formée à l'extrémité de l'élément.

Dans un mode de réalisation, l'amortisseur comporte un premier et un deuxième desdits au moins un élément de transmission de force ; Le premier et le deuxième éléments sont fixés à une partie de liaison dite centrale ;
un déplacement de ladite partie centrale suivant une direction dans un sens soumet le premier élément à une traction, alors que le deuxième élément est en compression ou soumis à un effort nul ;
un déplacement de ladite partie centrale suivant la même direction mais en sens opposé soumet le deuxième élément à une traction, alors que le premier élément est en compression ou soumis un effort nul. Dans la phrase précédente, le terme 'effort nul' doit être compris comme un état sous faible contrainte, dans lequel peut être l'élément lorsqu'une de ses extrémités est libre.

Dans un mode de réalisation, l'amortisseur comporte un premier groupe et un deuxième groupe desdits au moins un élément de transmission de force ;
les éléments du premier et du deuxième groupe sont fixés à une partie de liaison dite centrale dont une portion de fixation est disposée entre les éléments du premier groupe et les éléments du deuxième groupe ;
la partie de liaison centrale se positionne sous l'effet des forces que lui appliquent les éléments des premier et deuxième groupes.

Un deuxième objectif de la présente invention est de proposer un dispositif de maintien pour un ouvrage d'art, comprenant un amortisseur permettant d'assurer de manière durable le maintien mécanique de l'ouvrage d'art, en particulier lorsqu'il est implanté dans une région présentant un risque sismique élevé. Le dispositif doit notamment être à même de conserver ses propriétés mécaniques dans un large domaine de fréquences de sollicitations.

Cet objectif est atteint grâce au fait que le dispositif comporte au moins un amortisseur tel que défini précédemment.

Le dispositif de maintien peut notamment comprendre au moins un hauban, par exemple être un ensemble de fixation par haubans.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une coupe schématique d'un amortisseur selon l'invention, dans un mode de réalisation ;
- la figure 2 est une vue partielle en perspective d'un dispositif de maintien pour un ouvrage d'art, dont fait partie l'amortisseur de la figure 1 ;
- la figure 3 est une coupe partielle représentant un détail de l'amortisseur de la figure 1 ;
- la figure 4 est une coupe partielle représentant un détail d'un amortisseur selon l'invention, dans un deuxième mode de réalisation.

De manière générale, un amortisseur selon l'invention peut être relié à tout type de corps, qu'il s'agisse de machines, d'ouvrages d'art ou autre. Il peut ainsi être utilisé pour amortir les vibrations de machines tournantes, ou pour amortir des déplacements relatifs entre des organes de déplacement d'un véhicule (des roues) et le châssis de celui-ci, etc.

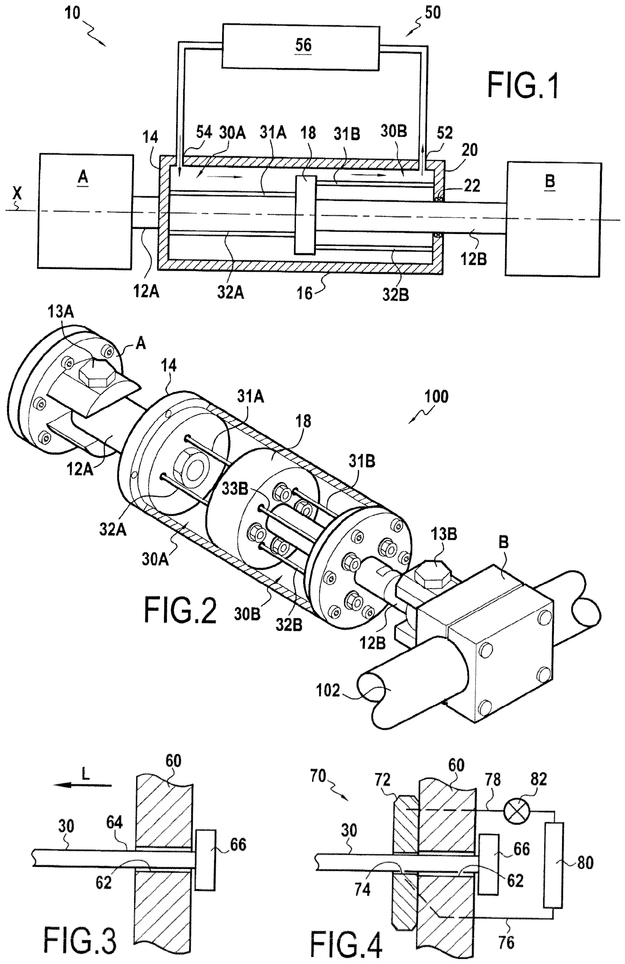

Dans l'exemple choisi pour illustrer l'invention (figures 1 et 2), un amortisseur 10 selon l'invention est intégré à un ensemble de haubanage 100 qui supporte un pont non représenté. L'ensemble de haubanage 100 constitue le dispositif de maintien chargé de maintenir en place le tablier du pont, quelles que soient les sollicitations (trafic, vent, ondes sismiques) subies par celui-ci.

Dans le dispositif de maintien 100, l'amortisseur 10 est fixé de côté (et non dans l'axe) sur un hauban 102, relié au tablier du pont. L'amortisseur 10 sert à amortir des vibrations et déplacements latéraux de la partie du hauban 102 à laquelle il est fixé. Naturellement, le dispositif de maintien 100 comporte d'autres haubans et d'autres amortisseurs identiques à l'amortisseur 10, non représentés.

L'amortisseur 10 comporte une première et une deuxième parties de liaison 12A et 12B, reliées à deux corps A et B pour amortir un déplacement relatif entre ceux-ci. Dans l'exemple considéré, le corps A est une bride fixée au tablier du pont, et le corps B est une bride fixée sur le hauban 102.

Les parties de liaison 12A et 12B sont fixées aux corps A et B par des moyens de fixation comprenant notamment des boulons 13A et 13B.

La première partie de liaison 12A se présente comme une barre de liaison, liant le corps A à une face d'extrémité 14 d'un caisson rigide 16. La barre 12A et le caisson 14 sont chacun suffisamment solides pour transmettre des efforts entre les corps A et B, à l'occasion d'un déplacement relatifs entre ces derniers.

La deuxième partie de liaison 12B se présente comme également une barre de liaison, liant le corps B à une plaque centrale 18 de l'amortisseur 10. Les deux barres 12A et 12B sont alignées sur un même axe X suivant lequel l'amortisseur 10 transmet des efforts entre les corps A et B.

Le caisson 16 relié à la barre 12A a une forme générale cylindrique allongée, et présente des faces planes 14 et 20 perpendiculaires à son axe X. Sa face d'extrémité 20 opposée à la face 14 comporte une ouverture centrale par laquelle passe la barre 12B.

La plaque centrale 18 est placée, dans la position de repos de l'amortisseur 10, sensiblement à mi-distance entre les faces 14 et 20, perpendiculairement à l'axe X. La position de repos de l'amortisseur est celle dans laquelle sensiblement aucune force ne transite via l'amortisseur entre les corps A et B.

La plaque centrale 18 est reliée au caisson 14 par deux groupes de quatre fils 30A et 30B. Chacun des fils 31A, 32A, 33A, 34A composant le groupe 30A relie la face 14 du caisson à la plaque centrale 18, parallèlement à l'axe X. De même, chacun des fils 31B, 32B, 33B, 34B composant le groupe 30B relie la face 20 du caisson à la plaque centrale 18, parallèlement à l'axe X. Les quatre fils de chacun des groupes 30A, 30B sont disposés symétriquement autour de l'axe X (avec une symétrie de rotation d'ordre 4). Les fils du groupe 30A et les fils du groupe 30B sont décalés angulairement autour de l'axe X, de manière à éviter qu'un fil d'un des groupes ne soit en face (suivant l'axe X) d'un fil de l'autre groupe.

Chacun des fils 31A-34A et 31B-34B (appelés collectivement 'fils 30') est légèrement tendu et ces tensions sont calculées pour permettre le maintien de la plaque 18 à mi-distance des faces 14 et 20, dans la position de repos de l'amortisseur.

Les fils 30 sont formés en fil en matériau à base d'alliage à mémoire de forme, c'est-à-dire composé majoritairement (et le plus souvent totalement) en un tel alliage de manière à présenter la propriété de mémoire de forme. Les fils 30 ont un diamètre de 2,5 mm et une longueur de 10 cm. La longueur de l'amortisseur (entre les axes des boulons 13A et 13B) est de l'ordre de 40 cm.

Les fils 30 constituent des éléments de transmission de force, relié aux deux parties de liaison 12A et 12B par l'intermédiaire respectivement du caisson 14, et de la plaque centrale 18.

Deux types de fixation sont possibles aux extrémités des fils reliées aux parties de liaison 12A et 12B, via respectivement les faces 14 et 20 du caisson 16, ou la plaque centrale 18 :
Un premier type de fixation est une liaison 'à encastrement', consistant à fixer l'extrémité d'un fil 30 à une partie de liaison sans permettre de déplacement relatif, que ce soit dans le sens qui tend à éloigner le fil 30 de la partie de liaison (ou de la portion de fixation sur la partie de liaison) ou dans le sens inverse. Lorsque les deux extrémités d'un fil 30 sont ainsi fixées, ou encastrées, quel que soit le sens du déplacement relatif entre les corps A et B, ce déplacement se traduit par un déplacement correspondant entre les extrémités du fil 30. Celui-ci est donc sollicité, soit en traction, soit en compression. L'ensemble des fils 30 sont donc sollicités, quel que soit le sens du déplacement relatif entre A et B.

En revanche dans un deuxième type de fixation, qui est illustré notamment par la figure 3, une extrémité de certains des fils 30 est bloquée dans le sens de déplacement qui éloigne le fil 30 de la portion de la partie de liaison sur laquelle il est fixé, à partir d'une position de blocage, alors que le déplacement du ou des fils 30 considéré(s) est libre dans le sens contraire.

La figure 3 représente un tel type de fixation, dans le cas de la fixation d'un fil 30 sur une pièce 60, qui peut être le caisson 14 ou la plaque centrale 18. Comme il peut s'agir de l'un quelconque des fils 30, la référence 30 désigne le fil sur la figure 3.

La pièce 60 présente un passage cylindrique 62 qui la traverse de part en part. Ce passage a un diamètre légèrement supérieur à la section du fil 30, de manière à permettre le coulissement du fil 30 avec un faible frottement.

L'extrémité du fil 30 a la forme d'une tige 64. Celle-ci passe à travers la pièce 60 dans le passage 62. A l'extrémité de la tige 64 est fixée une tête de blocage 66 (ou portion de blocage). Celle-ci est trop grosse pour pouvoir passer à travers le passage 62.

Aussi, le fil 30 réagit de la manière suivante aux sollicitations qui lui sont transmises :
- Dans le cas d'une sollicitation en traction, qui tend à éloigner le fil de la pièce 60 (de sa portion de fixation sur la pièce 60), à savoir vers la gauche sur la figure 3 (flèche L), la tête 66 est tirée par le fil 30 vers la gauche et se bloque sur la pièce 60. L'extrémité du fil 30 est bloquée. La traction exercée sur le fil 30 est transmise à la pièce 60.
- Dans le cas d'une sollicitation dans le sens inverse (le fil 30 est poussé vers la droite, sur la figure 3, dans le sens inverse à la flèche L) : La tige 64 se déplace en coulissant, avec peu ou pas de frottement dans le passage 62. Aussi, aucune contrainte n'apparaît dans le fil 30. Aucune force n'est transmise à la pièce 60 par le fil 30.

Au final, lors d'un déplacement relatif entre A et B suivant l'axe des X, l'amortisseur 10 réagit de la manière suivante :
Les deux groupes de fils 30A et 30B s'allongent tour à tour, suivant que la plaque centrale se déplace vers la droite ou vers la gauche (la gauche et la droite étant indiquées en référence aux figures). Lorsque la plaque 18 se déplace vers la droite, les fils 31A-34A sont allongés et en traction, et tendent à ramener la plaque 18 vers la gauche, alors que les fils 31B-34B ne sont pas sollicités, pour la raison indiquée précédemment.

La plaque 18 oscille et ce mouvement oscillant est peu à peu amorti. En effet, l'énergie de déplacement relatif des corps A et B est dissipée par les fils 30, du fait de leur comportement superélastique ; et assez rapidement le déplacement relatif entre A et B se stabilise, et la plaque centrale est ramenée à sa position de repos, ou à une autre position d'équilibre, au cas où l'amortisseur transmet une force (constante) entre les corps A et B.

Par ailleurs, l'amortisseur 10 comporte un limiteur de température 50 qui constitue un moyen de limitation de la température maximale atteinte par les fils 30.

Dans le mode de réalisation illustré par la figure 1, ce limiteur est agencé de la manière suivante (le limiteur 50 n'est pas représenté sur la figure 2 qui est une vue partielle de l'amortisseur 10) :
Le caisson 14 est sensiblement étanche, notamment grâce à un joint torique 22 disposé dans son ouverture dans laquelle passe la barre 12B. Le caisson 14 est rempli par un fluide caloporteur, dans lequel les fils 30 sont immergés, ce qui permet l'échange de chaleur entre le fluide et les fils.

Ce caisson présente deux ouvertures 52 et 54, placées à ses deux extrémités (c'est-à-dire, à proximité respectivement des faces 14 et 20).

Le limiteur de température 50 comporte des conduites de prélèvement et de transport de fluide, qui prélèvent le fluide par l'ouverture 52, et le réinjectent par l'ouverture 54, après l'avoir fait transiter dans un système de régulation thermique 56.

Ce système de régulation thermique 56 comporte une pompe pour faire circuler le fluide caloporteur, et des moyens de limitation de la température maximale atteinte par ledit fluide comprenant un capteur de de température du fluide, un échangeur de chaleur et une unité de contrôle électronique qui pilote l'échangeur de chaleur et la pompe en fonction des informations fournies par le capteur de température.

Dans le système de régulation thermique 56, le fluide subit un échange de chaleur. Le système de régulation thermique 56 peut être programmé pour limiter la température maximale atteinte par le fluide, ou pour réguler cette température, soit à une valeur donnée, soit dans une plage de températures donnée.

La figure 4 présente un autre mode de réalisation des moyens de limitation de la température maximale atteinte par le composant.

Dans ce cas, ces moyens sont réalisés en agençant, au sein même de l'amortisseur, un générateur 70 de courant électrique par effet Seebeck.

Pour cela, une pièce 72 en matériau thermoélectrique, ayant sensiblement la forme d'un disque épais, et présentant un passage 74 suivant l'axe du disque, est disposée autour du fil 30 au niveau de la tige 64. Le diamètre du passage 74 est à peine supérieur à celui de la tige 64, grâce à quoi celle-ci peut coulisser librement dans la pièce 72, mais communique facilement sa chaleur à la pièce 72.

La pièce 72 est fixée sur la pièce 60, qui est une partie de liaison ou solidaire d'une partie de liaison. Le générateur comporte en outre deux lignes électriques 76 et 78, fixées respectivement sur la partie centrale et sur la périphérie de la pièce 72.

Les lignes 76 et 78 sont reliées aux bornes d'un résistor 80. Enfin, une lampe électrique 82 est interposée sur la ligne 78.

Le générateur de courant 70 permet à l'amortisseur de fonctionner de la manière suivante : Lorsque l'amortisseur est sollicité par des déplacements (en fait, des oscillations) relatifs entre les corps A et B, cela induit un échauffement des fils 30. Cet échauffement se communique par conduction à la partie centrale de la pièce 72, la périphérie de cette pièce 72 restant, pour sa part, à température ambiante. Sous l'effet de cette différence de température un courant est généré par le générateur de courant 70. En passant à travers le résistor 80, le courant dissipe l'énergie thermique que le fil 30 transmet à la pièce 72. La dissipation de cette énergie permet de limiter la hausse de température des fils 30 ; ainsi, l'amortisseur conserve intactes ses capacités d'amortissement.

On notera que le mode de réalisation présenté sur les figures 1 et 2 présente un amortisseur (10) amélioré, dans lequel les éléments de transmission de force sont agencés de manière à pouvoir n'être sollicités (le cas échéant) qu'en traction.

Bien entendu, un amortisseur selon l'invention peut être plus simple. Il peut par exemple ne comporter qu'un seul groupe d'éléments (comprenant éventuellement un seul élément), tels que des barreaux rigides parallèles, joignant deux parties de liaison se faisant face. Dans ce cas, les éléments sont sollicités soit en traction, soit en compression, suivant le sens du déplacement relatif entre les corps A et B auxquels est fixé l'amortisseur.

En outre, dans les modes de réalisation présentés, l'élément de transmission de force et le composant à base d'alliage à mémoire de forme ne sont qu'une seule et même pièce, à savoir les fils 30. Naturellement, l'élément de transmission de force peut être plus complexe, et comporter par exemple des pièces de fixation aux extrémités d'une pièce en alliage de forme, pour assurer la fixation de cette dernière aux parties de liaison.

Enfin, naturellement, un amortisseur selon l'invention peut comporter d'autres moyens pour la dissipation de l'énergie de déplacement entre les corps A et B, venant en complément de la dissipation produite par le composant à base d'alliage à mémoire de forme. Par exemple, la pièce en matériau thermoélectrique peut être disposée dans le fluide caloporteur du premier mode de réalisation, et ainsi être déportée à distance du composant à base d'alliage à mémoire de forme. Le fluide caloporteur peut lui-même être un fluide visqueux, permettant un amortissement hydraulique.

## Revendications

1. Amortisseur (10) comportant une première et une deuxième parties de liaison (12A,12B), aptes à être reliées à deux corps (A,B) pour amortir un déplacement relatif entre ceux-ci, et
au moins un élément de transmission de force (30,31A-34A,31B-34B), relié à ces deux parties de liaison, et comprenant un composant (30,31A-34A,31B-34B) à base d'alliage à mémoire de forme qui se déforme en dissipant de l'énergie lorsqu'un tel déplacement relatif se produit ;
ledit amortisseur **se caractérisant en ce qu'**il comporte en outre des moyens de limitation (50) de la température maximale atteinte par ledit composant, qui comprennent au moins un générateur de courant (70) réalisé à base de matériau thermoélectrique et agencé de manière à pouvoir produire un courant électrique sous l'effet d'un échauffement dudit composant (30), ainsi que des moyens de dissipation (80) de l'énergie électrique transportée par ledit courant.

2. Amortisseur selon la revendication 1, dont les moyens de limitation (50) sont aptes à réguler la température atteinte par ledit composant de telle sorte que celle-ci demeure à une température ou dans une plage de température souhaitée.

3. Amortisseur selon la revendication 1 ou 2, dont lesdits moyens de limitation comportent un dispositif (56) apte à faire circuler un fluide caloporteur autour dudit composant, et des moyens de limitation (56) de la température maximale atteinte par ledit fluide.

4. Amortisseur selon l'une quelconque des revendications 1 à 3, dans lequel un courant produit par ledit générateur est utilisé pour transmettre une information.

5. Amortisseur selon l'une quelconque des revendications 1 à 4, dans lequel une partie (72) en matériau thermoélectrique dudit générateur est fixée sur une partie de liaison (60).

6. Amortisseur selon l'une quelconque des revendications 1 à 5, comportant des moyens (70,82) pour signaler la rupture de l'un des éléments.

7. Amortisseur selon l'une quelconque des revendications 1 à 6, dans lequel au moins un élément de transmission de force (30) est lié à une portion de fixation (60) d'une partie de liaison, un déplacement relatif de l'élément lié par rapport à ladite portion est stoppé à partir d'une position de blocage dans le sens qui tend à éloigner ledit élément lié de ladite portion, alors que ledit déplacement relatif est libre dans le sens inverse.

8. Amortisseur selon la revendication 7, dans lequel
ledit élément lié (30) comporte une tige de liaison (64) disposée de manière coulissante à l'intérieur d'un passage débouchant (62) de la portion de fixation, et une portion de blocage (66) fixée à l'extrémité de ladite tige de liaison, la forme de la portion de blocage empêchant le passage de celle-ci à travers ledit passage.

9. Amortisseur selon l'une quelconque des revendications 1 à 8, comportant un premier groupe (30A) et un deuxième groupe (30B) desdits au moins un élément de transmission de force ;
les éléments (31A-34A, 31B-34B) du premier et du deuxième groupe sont fixés à une partie de liaison dite centrale dont une portion de fixation est disposée entre les éléments du premier groupe et les éléments du deuxième groupe ;
la partie de liaison centrale se positionne sous l'effet des forces que lui appliquent les éléments des premier et deuxième groupes.

10. Dispositif (100) de maintien pour un ouvrage d'art, comportant au moins un amortisseur selon l'une quelconque des revendications 1 à 9.

## Patentansprüche

1. Dämpfer (10), umfassend einen ersten und einen zweiten Verbindungsteil (12A, 12B), die geeignet sind, mit zwei Körpern (A, B) verbunden zu werden, um eine relative Verschiebung zwischen diesen zu dämpfen, und
mindestens ein Kraftübertragungselement (30, 31A-34A, 31B-34B), das mit den beiden Verbindungsteilen verbunden ist, und umfassend eine Komponente (30, 31A-34A, 31B-34B) auf Basis einer Legierung mit Formgedächtnis, die sich verformt, wobei sie Energie ableitet, wenn eine solche relative Verschiebung stattfindet,
wobei der Dämpfer **dadurch gekennzeichnet ist, dass** er ferner Mittel (50) zur Begrenzung der maximal von der Komponente erreichten Temperatur umfasst, die mindestens einen Stromgenerator (70), der auf Basis eines thermoelektrischen Materials hergestellt und dazu vorgesehen ist, elektrischen Strom unter der Wirkung einer Erwärmung der Komponente (30) zu erzeugen, sowie Mittel (80) zur Ableitung der von dem Strom transportieren elektrischen Energie umfasst.

2. Dämpfer gemäß Anspruch 1, dessen Begrenzungsmittel (50) geeignet sind, die von der Komponente erreichte Temperatur zu regeln, so dass diese auf einer gewünschten Temperatur oder in einem gewünschten Temperaturbereich bleibt.

3. Dämpfer gemäß Anspruch 1 oder 2, dessen Begrenzungsmittel eine Vorrichtung (56), die geeignet ist, ein flüssiges Kühlmittel um die Komponente zirkulieren zu lassen, und Mittel (56) zur Begrenzung der von der Flüssigkeit maximal erreichten Temperatur umfassen.

4. Dämpfer gemäß einem der Ansprüche 1 bis 3, bei dem von dem Generator erzeugter Strom verwendet wird, um eine Information zu übertragen.

5. Dämpfer gemäß einem der Ansprüche 1 bis 4, bei dem ein Teil (72) aus thermoelektrischem Material des Generators auf einem Verbindungsteil (60) befestigt ist.

6. Dämpfer gemäß einem der Ansprüche 1 bis 5, umfassend Mittel (70, 82), um den Bruch eines der Elemente anzuzeigen.

7. Dämpfer gemäß einem der Ansprüche 1 bis 6, bei dem mindestens ein Kraftübertragungselement (30) mit einem Befestigungsabschnitt (60) eines Verbindungsteils verbunden ist, eine relative Verschiebung des verbundenen Elements in Bezug zum Abschnitt von einer Feststellposition ausgehend in die Richtung, die dazu neigt, das verbundene Element vom Abschnitt zu entfernen, gestoppt wird, während die relative Verschiebung in die umgekehrte Richtung frei ist.

8. Dämpfer gemäß Anspruch 7, bei dem das verbundene Element (30) eine Verbindungsstange (64), die gleitend im Inneren einer Durchführung (62) des Befestigungsabschnitts angeordnet ist, und einen Feststellabschnitt (66) umfasst, der am Ende der Verbindungsstange befestigt ist, wobei die Form des Feststellabschnitts den Durchgang desselben durch die Durchführung verhindert.

9. Dämpfer gemäß einem der Ansprüche 1 bis 8, umfassend eine erste Gruppe (30A) und eine zweite Gruppe (30B) des mindestens einen Kraftübertragungselements,
wobei die Elemente (31A-34A, 31B-34B) der ersten und zweiten Gruppe an einem sogenannten zentralen Verbindungsteil befestigt sind, von dem ein Befestigungsabschnitt zwischen den Elementen der ersten Gruppe und den Elementen der zweiten Gruppe angeordnet ist,
wobei das zentrale Verbindungsteil unter der Wirkung der Kräfte, die von den Elementen der ersten und zweiten Gruppe darauf ausgeübt werden, positioniert wird.

10. Haltevorrichtung (100) für ein Kunstwerk, umfassend mindestens einen Dämpfer gemäß einem der Ansprüche 1 bis 9.

## Claims

1. A damper (10) including first and second connecting parts (12A, 12B), able to be connected to two bodies (A, B) to damp a relative movement between them, and
at least one force transmitting element (30, 31A-34A, 31B-34B), connected to these two connecting parts, and comprising a component (30, 31A-34A, 31B-34B) made with a base of a shape memory alloy that deforms while dissipating energy when such a relative movement occurs,
said damper being **characterized in that** it further includes means (50) for limiting the maximum temperature reached by said component, which comprise at least one current generator (70) made with a base of a thermoelectric material and arranged so as to be able to produce an electric current under the effect of heating of the component (30), as well as means (80) for dissipating the electric energy carried by said current.

2. The damper according to claim 1, the limiting means (50) of which are able to regulate the temperature reached by said component such that the latter remains at a desired temperature or in a desired temperature range.

3. The damper according to claim 1 or 2, the limiting means of which include a device (56) able to circulate a heat transfer fluid around said component, and means (56) for limiting the maximum temperature reached by said fluid.

4. The damper according to any one of claims 1 to 3, wherein a current produced by said generator is used to transmit information.

5. The damper according to any one of claims 1 to 4, wherein a part (72) made from thermoelectric material of said generator is fastened on a connecting part (60).

6. The damper according to any one of claims 1 to 5, including means (70, 82) for indicating that one of the elements has broken.

7. The damper according to any one of claims 1 to 6, wherein at least one force transmitting element (30) is connected to a fastening portion (60) of a connecting part, a relative movement of the connected element relative to said portion is stopped from a blocking position in the direction tending to move said connected element away from said portion, whereas said relative movement is free in the opposite direction.

8. The damper according to claim 7, wherein
said connected element (30) includes a connecting rod (64) arranged sliding inside a through passage (62) of the fastening portion, and a blocking portion (66) fastened at the end of said connecting rod, the shape of the blocking portion preventing the passage thereof through said passage.

9. The damper according to any one of claims 1 to 8, including a first group (30A) and a second group (30B) of said at least one force transmitting element;
the elements (31A-34A, 31B-34B) of the first and second group are fastened to a so-called central connecting part, a fastening portion of which is arranged between the elements of the first group and the elements of the second group;
the central connecting part is positioned under the effect of the forces applied to it by the elements of the first and second groups.

10. A device (100) for holding a work of art, including at least one damper according to any one of claims 1 to 9.
